## Europäisches Patentamt

(19) **European Patent Office**

Office européen des brevets

(11) Publication number: **0 053 828**
**A1**

(12) # EUROPEAN PATENT APPLICATION

(21) Application number: 81110219.3

(22) Date of filing: 07.12.81

(51) Int. Cl.³: **F 16 B 15/08**

(30) Priority: 08.12.80 US 213828

(43) Date of publication of application:
16.06.82 Bulletin 82/24

(84) Designated Contracting States:
BE DE FR GB IT NL SE

(71) Applicant: SIGNODE CORPORATION
3600 West Lake Avenue
Glenview Illinois 60025(US)

(72) Inventor: Shelton, Lawrence S.
9223 N. Marmora
Morton Grove Illinois 60053(US)

(72) Inventor: Wright, Robert W.
640 Tonne Road
Elk Grove Village Illinois 60007(US)

(72) Inventor: Boigk, Dieter G.
4311 W.Oakton
Skokie Illinois 60076(US)

(74) Representative: Groening, Hans Wilhelm, Dipl.-Ing.
Siebertstrasse 4 Postfach 860 340
D-8000 München 86(DE)

(54) Washer strip for fasteners.

(57) A washer strip (12) is provided for use in connection with a rapid acting fastener driving tool apparatus. The washer strip comprises a plurality of resilient sealing washers (24) serially connected at selected weakened shear locations (26). Each of the washers defines an opening (28) adapted to receive a fastener element shank portion (19), when the fastener (14) is driven by a driver blade (16).

The fastener (14) slides within the washer (24) until the washer is situated just beneath the head portion (20), whereupon the washer (24) is sheared and separated at the shear location from the remainder of the connected washers in the strip (12). A seal is thus provided on the portion of the shank (19) just beneath the head portion (20) between the fastening element head portion and the portion of the shank distant from the head portion, so that substantially no waste material is produced. In another arrangement one or more washer strips (22) hold and carry the fasteners (14) in strip form.

FIG. 1B

FIG. 2A

WASHER STRIP FOR FASTENERS

DESCRIPTION

Technical Field of the Invention

This invention relates to washer strips both alone and in combination with fasteners for use in fastener driving tools.

Background of the Invention

Recently, automatic fastener driving tools have been used to drive fasteners such as nails, staples, rivets and the like, and have been employed extensively in the building and construction industry. Various types of strips have been used to hold and carry nails, so that the nails can be stored and handled in strip form. When assembled in strip form, the fasteners can be handled conveniently and quickly, especially when loading the fasteners into the magazine of the driving tool.

Most of the fastener strips function only to hold the nails or fasteners together in a magazine fashion until the nails or fasteners are fired or driven from the tool. During firing the carrier material used to hold the fasteners together is removed from the fastener thereby producing large quantities of waste material being disposed around the area where the tool is being used.

With respect to both washer strips and fastener washer combination strips, the prior art attempts have not met with a high degree of success. For example, most of these fastener-washer combination arrangements comprise a ribbon or strip from which circular washers are punched during the driving operation, leaving a substantial amount of sealing waste material. This washer waste material or debris, before being ejected from the tool, could result in clogging of the tool during the driving action. This clogging action could result in

-2-

rendering the tool totally inoperative or could seriously affect the speed at which the tool could be operated and thus would tend to seriously impair its efficiency, or land in the work area, or on the surface of a working material or receiving material, and might inhibit the sealing effect of a later-driven fastener and washer. The same has been generally true for washer strips fed into the tool separate from the fasteners.

Fastener and washer combinations have involved using the same plastic material for both the fastener and the washer, which either results in the fastener material being too resilient and weak, or results in the washer material being too rigid to act as a suitable washer. Metal and other rigid materials have been used as washer materials and have proved to be unsuitable because even if a suitable sealing effect is achieved immediately after the fastener is driven into a receiving material, movement and settling of a working material intended to be attached to the receiving material would possibly result in a gap being created between the head portion of the fastener and the working material. Because the washer material in these arrangements has been rigid, it does not have the elastic properties to fill this gap, and thus the device falls short of its goal of providing a seal.

Thus, there is a need for a washer strip for use in fastener driving tools that provides suitable washers with good washer characteristics, which produces little or no waste or debris to clog the tool or litter the work area during the driving action, and at the same time hold the fasteners together.

Summary of the Invention

In accordance with the present invention, there is provided a washer strip for use in

-3-

connection with a rapid acting fastener driving apparatus.

In one arrangement a washer fastener combination is provided whereby the washer strip holds a plurality of rigid fastener elements having head portions and elongated shanks spaced apart from each other. The strip serves as a carrier means for maintaining the fasteners in strip form. Each washer strip comprises a plurality of resilient sealing washers serially connected at selected severable locations or predetermined shear points or locations. Each of the washers defines an opening less than the shank cross-section through which the shank portions of one of the fastener elements extends, so that it firmly grips the fastener shank.

In this combination arrangement, the fastener element is thus guided and supported by a washer until its shank portion is driven into a receiving material. During the driving action the fastener shank slides within the washer opening until the washer is situated just beneath the fastener's head portion. When so situated, the washer associated with that particular fastener is sheared and separated from the remainder of the connected washers in its strip. When more than one strip is used, each washer is similarly sheared in the same manner. Each washer will contact either the head portion of the fastener, or a washer previously sheared, but in each case the washer will, for description purposes, be situated just beneath the fastener's head portion before it is sheared. The uppermost washer would be immediately beneath, while other, lower washers will be further beneath the head portion when they are sheared, but in each case the washer will be considered to be "just beneath", for

-4-

description purposes. Prior to and during the fastener driving into the receiving member the washers control and guide the fastener in the driving tool. This assures that the fastener is driven straight into material such as corrugated roof decking. Also, in some arrangements, it might be desired to have a washer strip already situated just beneath the head portions of the fasteners when the strip carries the fasteners.

After the fastener's shank portion is driven into the receiving material, the washer which is now located on the portion of the shank immediately below and adjacent to the head portion provides a seal on the portion of the shank immediately adjacent to the head portion between the fastening element head portion and the portion of the shank distant from the head portion. Significantly, the construction of the washer strip is such that substantially no waste material is produced when the washers are separated from the strips since the strip portions become the separate washers.

In another arrangement, the washer strip does not serve as a carrier means for the fasteners. In this case the washers receive fasteners only during the driving operation of that fastener. Thus, the driving tool receives fasteners and at least one washer strip separately. In other respects, the washer strip functions in the same manner as in the first arrangement described above wherein the washer strip serves as a carrier.

In either of the two previously described arrangements, the fastener elements could be nails, screws, staples, pins or rivets and are of a rigid material such as metal or plastic whereas the washer material is resilient, so that the washer can return

-5-

to its original dimension if needed to fill any gaps created by settling or contraction of the receiving material and/or working material long after the fastener's shank portion is driven into the receiving material. Also, the resilient material can stop the leakage of liquids and gases, may act as an electrical insulator, while also dampening vibrations between a receiving material, and/or working material and the fastening element during the driving operation. The material has good compressibility, high tear resistance so that it does not fail during handling or firing, and high shear strength. The material could also have good resistance to noise, temperature variations, ultraviolet light, rust, stain and ozone. Additionally, it should be strong enough to serve as a fastener element carrier material, if this arrangement is desired. Typical washer materials are thermoplastic and thermoset elastomers.

Numerous other advantages and features of the present invention will become readily apparent from the following detailed description of the invention and several embodiments thereof, from the claims and from the accompanying drawing.

Brief Description of the Drawing

Figures 1A, 1B, 1C and 1D are side elevational views showing a partial fastener-washer strip located in position in a fastener driving tool during various stages of driving;

Figure 1E is a view taken along line 1E-1E of Figure 1A;

Figure 2A is a partial plan view of a preferred embodiment of a washer strip;

Figure 2B is a view taken along line 2B-2B of Figure 2A;

Figure 2C is a view taken along line 2C-2C of Figure 2A;

Figure 2D is a plan view of another embodiment of a strip showing rectangular openings;

Figures 2E and 2F are views of two alternate embodiments of a washer strip taken along line 2E-2E and 2F-2F of Figure 2A;

Figure 3A is a plan view of another preferred embodiment of a washer strip;

Figure 3B is a view taken along line 3B-3B of Figure 3A;

Figure 3C is a view taken along line 3C-3C of Figure 3A;

Figure 3D is a plan view of another version of the preferred embodiment shown in Figures 3A, 3B and 3C;

Figure 4A is a plan view of yet another embodiment of a washer strip;

Figure 4B is a view taken along line 4B-4B of Figure 4A showing two washer strips, and also showing fastener-nails;

Figure 4C is a view taken along line 4C-4C of Figure 4A;

Figure 5 is a plan view of another preferred embodiment similar to that in Figure 4A, but showing arcs instead of V notches;

Figure 6 is a cross-sectional view of a fastener element with washers shown with the shank received in a receiving material with a working material attached to the receiving material;

Figure 7A is a plan view of another preferred embodiment of a washer strip;

Figure 7B is a view taken along line 7B-7B of Figure 7A also showing two washer strips, and also showing fastener-nails;

Figure 8A is a plan view of still another preferred embodiment of a washer strip;

Figure 8B shows the embodiment of Figure 8A with a view taken along line 8B-8B thereof;

Figure 8C shows a slightly different embodiment than that shown in Figures 8A and 8B;

Figure 8D is a plan view of a slightly different embodiment than that shown in Figures 8A and 8B;

Figure 8E is a side cross-sectional view of the embodiment of Figure 8D taken along line 8E-8E thereof;

Figure 9 is a plan view of square washers shown joined together at their corners;

Figure 10A is a cross-sectional view showing two washer strips joined together;

Figure 10B is a cross-sectional view showing two stepped washer strips joined together;

Figure 11A is a plan view showing an embodiment where the fastener is a staple;

Figure 11B is a cross-sectional side view taken along line 11B-11B of Figure 11A;

Figure 11C is a cross-sectional front view taken along line 11C-11C of Figure 11A;

Figure 11D is a cross-sectional front view taken along line 11D-11D of Figure 11A;

Figure 11E is a cross-sectional front view of another embodiment of a washer strip wherein the fasteners are staples;

Figure 12A is a cross-sectional view of another embodiment of a washer strip wherein the fasteners are staples;

Figure 12B is a front view thereof taken along line 12B-12B of Figure 12A;

Figure 12C is a cross-sectional side view of the same embodiment of Figure 12A after the staple is received in a receiving material;

Figure 12D is a front view thereof taken along line 12D-12D of Figure 12C;

Figure 13A is a side view of a single washer strip and paper strip arrangement;

Figure 13B is a side view of a single washer strip and wire arrangement; and

Figure 13C is a cross-sectional side view showing an embodiment of a head strip.

Detailed Description of the Preferred Embodiment

While this invention is susceptible of embodiment in many forms, there are shown in the drawings and will herein be described in detail preferred embodiments of the invention. It should be understood, however, that the present disclosure is to be considered as an exemplification of the principles of the invention and is not intended to limit the invention to the embodiments illustrated. The same last two digits in each numeral designate similar or functionally analogous elements in the various embodiments.

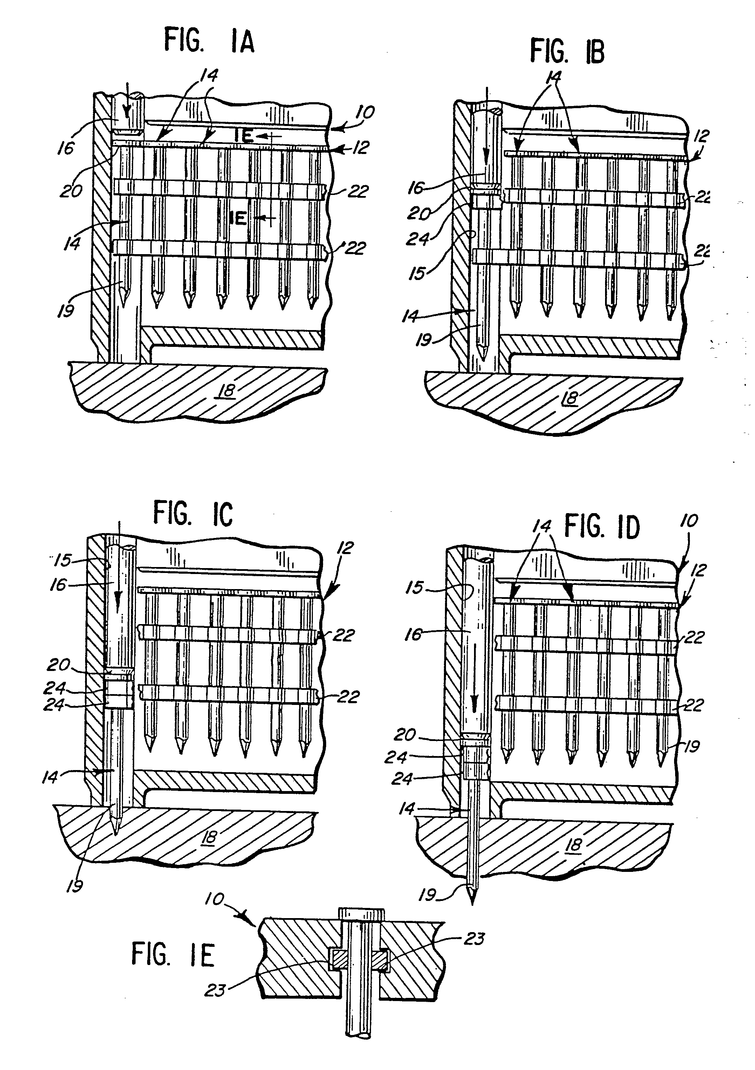

Referring now to Figure 1A, there is shown a partial view of a magazine 10 containing a section of a fastener-washer strip 12 wherein a fastener 14 is in the drive channel 15 and a driver blade 16 is disposed above the leading fastener in the drive channel 15. Figures 1B, 1C and 1D show the driver blade 16 acting downwardly on the leading fastener in the strip and driving it into a receiving material 18 and will be described in greater detail below. The fastener element 14 in these Figures is a conventional nail having a lower shank portion 19 and a head portion 20.

Figures 1C and 1D illustrate a fastener being driven into a single receiving material 18 as will be described below. As will become apparent
from the following discussion, the fastener element
14 can be used for attaching a single working
material to a receiving material, or for attaching
any number of materials to each other.

As mentioned above, the fastener element
could be a rivet, a screw having a threaded shank, or
a fastener having a ring shank or square shank, and
the nail element might have a head configuration
other than the full rounded head configuration shown
in Figures 1A-1D. The fastener nails are shown with
the shanks 19 spaced apart from each other.

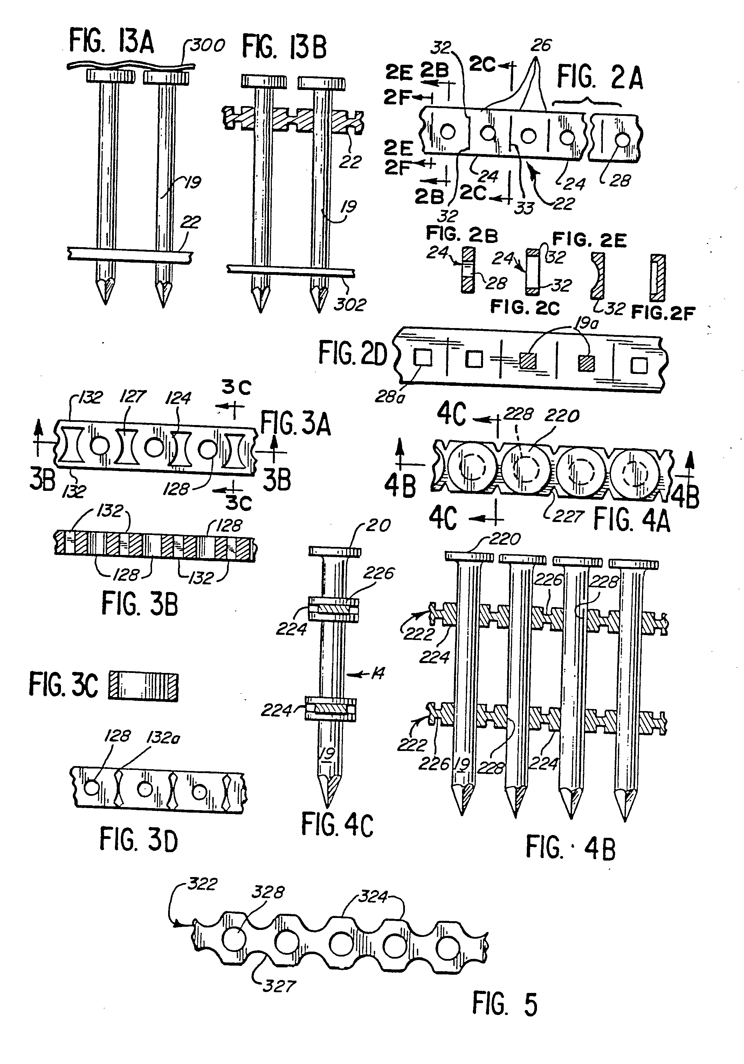

While the fastener-washer strip 12 is shown
in these Figures as having two washer strips 22, only
one washer strip 22 may be necessary. Alternatively,
it could have more than two strips. The washer strip
could serve as a carrier means for the fastener elements and when used this way one or more washer
strips 22 are preferably located beneath the head
portion 20 of the fastening element along the
elongated shank portion 19. The washer strip, when
serving as a carrier means maintains the fastener
elements in parallel side-by-side relationship. Each
washer strip 22, as best shown in an embodiment in
Figure 2A, comprises a plurality of resilient sealing
washers 24 serially connected at severable locations
26 which define predetermined shear points. These
predetermined shear points are designed into the
strip, so that the strip serves a unique dual
function of becoming washers and carrying fasteners
in some embodiments.

As shown in Figure 1A, the driver blade 16
is above the leading fastener in the strip. As the
driver blade contacts the leading fastener head
portion 20, the shank portion 19 slides through the associated washers 24. A washer 24 is sheared from the remainder of its strip 22 only when it is situated just beneath the head portion of the fastener. Thus, when more than one strip is used, the washers are sheared at different times. This sequence is illustrated in the Figures 1B, 1C and 1D. Thus, while the openings are shaped so as to firmly engage the fastener shank, the force needed to shear a washer 24 from its strip 22 is greater than the gripping force which holds the fastener in the opening, so that the fastener shank will slide within the washer opening before the washer is sheared off from its strip 22.

Figure 1E shows, in partial cross-section, a driving tool for use with an embodiment of the present invention. The magazine 10 has a shelf 23 which accommodates and supports the fastener strip during firing. This insures that the strip maintains its integrity during the driving operation of the fastener whereupon a washer will be separated from the strip. Of course, more than one shelf 23 can be provided if more than one strip is used.

Each washer 24 defines an opening 28 that receives one of the fastener elements firmly within said opening preferably, but not necessarily, at a position spaced apart from the head portion 20 of the fastener element, as shown in Figures 1A-1D. The size and shape of an opening 28 is dictated by the size and shape of the fastening element shank portion 19 so that the surrounding washer material firmly engages the shank portion 19 and holds the fastener elements in a magazine strip form as shown in Figures 1A-1D. Since the fastener elements are preferably full headed round-shanked nails as shown in these Figures, the openings 28 are preferably circular as shown in Figure 2B. For fastener elements having rectangular cross-sectional shanks, the size and shape of the opening could be as shown in Figure 2D, indicated by reference numeral 28a. The shank of the fastener so received in the opening 28a is indicated by reference numeral 19a in Figure 2D.

Figure 2C shows a cross-sectional view of the severable location 26 of the washer strip 22. As shown in Figure 2A, the sealing washers are preferably rectangular or square in shape and are arranged in the washer strip so that the washers abut and contact each other on a common side. The washers, as shown in Figure 2C, are preferably joined only at the lateral edges 32 of the strip 22. Thus, it can be appreciated that the force of the driving plunger 16 will enable a fastener to slide within the washer opening until the washer is situated just beneath the head portion whereupon it will then be sheared and separated at one or more weakened shear locations 26 from the remainder of the connected washers 24 in the washer strip 22. The strip 22 could be constructed by first producing a uniform strip, then punching or forming openings 28 and then cutting slits 33 into the strip.

Figures 2E and 2F show two alternatives for the shape and size of the slits 33. Figure 2E shows the predetermined shear point cut in the shape of a radius or arc, whereas Figure 2F shows a straight predetermined shear point shaped cut.

As the fastening element 14 is being driven along with one or more associated washers 24 into a receiving material 18 by the driving plunger 16, a severed washer 24 will contact a working material being attached to the receiving material 18. The driving tool is preferably set so that the washer 24, (or two washers 24, in the case of two washer strips) will be compressed by the head portion 20 of the fastening element as the shank is driven into the receiving material 18. Thus, when adjustments occur in a working material 34 after being attached to the receiving material 18, the washer material 24 will be able to return to its original shape and fill any gap which would otherwise be created between the head portion 20 and the working material 34.

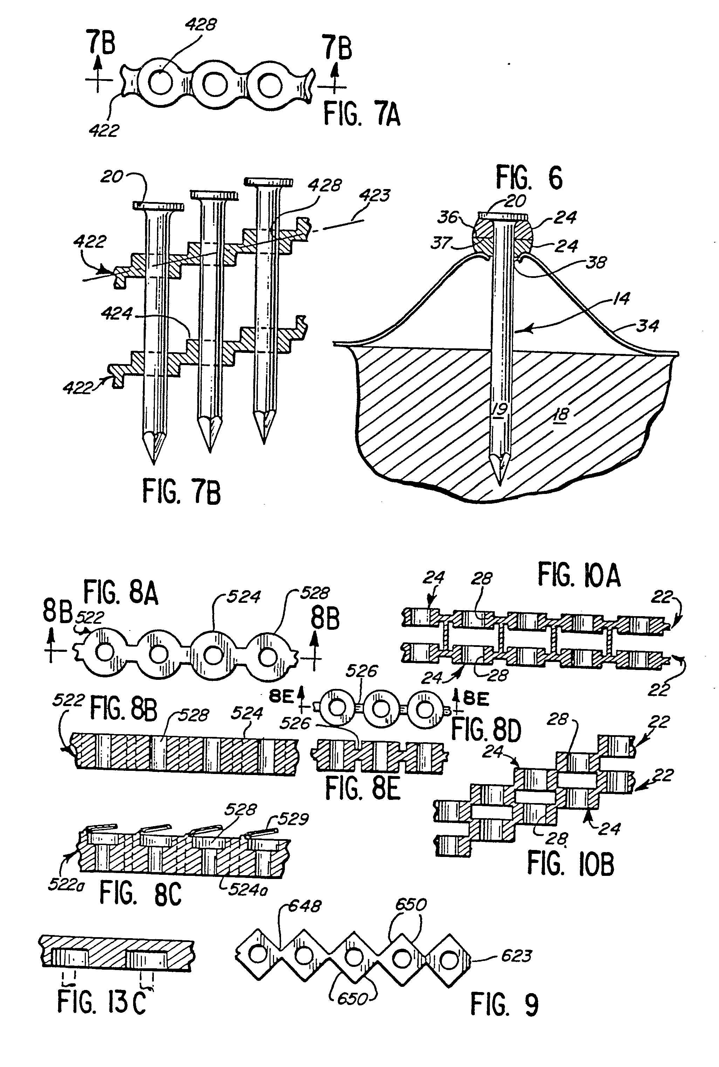

Figure 6 shows a fastening element installed into a receiving material 18 with two washer elements 24 shown compressed between the head portion 20 and a working material 34 which is to be attached to the receiving material 18. As can be appreciated from Figure 6, both of the washer elements 24 firmly engage the elongated shank portion 19 so that when used in this double strip fashion, one washer engages the head portion 20 and another washer engages the working material 34 with the coacting, abutting surfaces 36 and 37 of the two washers 24 engaging each other. This two washer stack arrangement has the advantage of providing a washer assembly having excellent settling and adjustment characteristics. The uppermost washer 24 conforms to the head 20 of the fastening element while the lower washer 24 conforms to the aperture 38 in the working material 34 thus leaving the coacting washer surfaces to adjust and position themselves relative to each other. The washers 24 may be material having properties which allows the washers 24 to expand and contract at rates independently of each other and might even have different compression and sealing characteristics. Again, only one washer 24 may be used to provide a desired sealing function.

The washer strip or fastener-washer combination could be ideally employed in the construction

-13-

and building industry to water proof the roof decking or wall panel of any buildings exposed to the elements. Two such applications, by way of example only, are farm buildings and industrial buildings. However, it can be used for many other applications wherever a good seal for a fastener is desired.

The washer material is preferably a thermoplastic, or thermoset elastomer which contains the basic properties of being highly compressible and elastic under low or high loads and returning to its original dimension after release of the load and having resiliency to shape around contoured surfaces.

Other materials, and combinations thereof, as well as some of the natural or synthetic rubbers and combinations thereof would also prove satisfactory. The material preferably has good compression set and good resistance to ultraviolet light and ozone to prevent decay. The material can be used to seal against the flow of water, air, gases, vibration and noise and will possess high shear strength. The material must not change its properties with time, or, due to severe weather conditions, over a wide range of temperatures during storage, firing and service. The material must have good impact and other properties that are important for a fastener carrier material if the fastener-washer arrangement is used. The fastener carrier material may be a good electrical insulator and have good sound deadening or absorption properties in case it is used for that service.

In the fastener-washer combination arrangement, the washer carrier material could be formed by molding or extrusion methods from a single or multiple component material, and the fasteners themselves could be inserted into a finished strip,

-14-

or the carrier material could be extruded or molded around the fasteners and can be molded or extruded as a unit from two different materials.

In addition to the embodiment shown in Figures 2A, 2B, and 2C, other embodiments for the washer strips 22 are shown in the other Figures. Figures 3A, 3B and 3C show a washer strip similar to that shown in Figures 2A, 2B and 2C except that the basic washer 124 configuration is circular instead of rectangular or square. The cut-outs 127 are hour glass in shape, so that the washers 124 are held or connected together at their lateral edges 132 of the strip 122. The lateral edge could form a V-shape to define and establish a more pronounced predetermined shear point 132a, such as that shown in Figure 3D.

Figures 4A, 4B and 4C and Figure 5 show other embodiments. In Figures 4A, 4B and 4C, the severable locations 226 are disposed laterally centrally to the washer strip 222. To put it another way, the individual washers 224 are joined in the center of the strip instead of the lateral outside of the strip 222 when one looks from a plan view of Figure 4A. The strip 222 at the severable locations 226 define V-shape notches 227. The strip in Figure 4A could be without "V" notches.

Figure 5, on the other hand shows a U-shaped notch or "radius" 327. As shown in the elevational view, Figure 4B, these severable connector portions 226 are disposed centrally vertically or half way up the washer strip 222. Alternatively, these severable locations 226 can be disposed on the lower edge of the strip 222 or the upper edge of the strip 222 (not shown). To put it another way, the severable locations 226 do not have to be central with the thickness of the strip but can be located towards the top or bottom of the thickness of the strip. Thus, since the severable location 226 as shown in Figure 4C are smaller in both the horizontal and vertical direction, they tend to localize or define predetermined shear points or locations.

Referring now to Figure 7A, the embodiment illustrated, washer strip 422, is similar to that shown in Figure 5, except that Figure 7B shows a set of two washer strips 422, each showing the individual washers 424 joined in stepped fashion. When this stepped embodiment is used, the magazine of the fastener driving tool should be inclined, so that the central axes of the fastener elements are generally parallel to the central axis of the driving plunger 16. This stepped arrangement could provide for the rounded head portions 20 of the illustrated nails to overlap each other, thereby providing a more compact arrangement providing more nails per linear strip. Also the stepped arrangement is useful for nailing in tight corners where the gun magazine would interfere, or in the case of "toe-nailing", a term used to describe the operation of nailing other than at a right angle to the workpiece. In this stepped arrangement, the central axis of the strip illustrated by line 423 is at an acute angle, here between about 40° to 85° to the central axis of the fastening elements 14 received in the openings 428. (The central axis is a line formed by joining the geometric midpoints of each individual washer in the strip.) In the non-stepped arrangement of the previously illustrated embodiments, the sealing washers are arranged in the strip so that the central axis of the strip is generally normal to the axis of a fastener element 14 received in the openings.

Figures 8A and 8B show an alternative embodiment of a washer strip 522. The washers 524

-16-

are circular and are joined at the center of the strip. Figure 8C shows an alternative for the size and shape of the openings 528 of the washers. Each opening 528 in Figure 8C has a larger cross-sectional area in the upper part of the washer to receive the head portion 20 of a fastener element whereas the lower part of the washer has a cross-sectional area adapted to engage the shank portion 19 of a fastener element. As shown in Figure 8C the strip could also be provided with a hinged cover 529 either integrally molded with the strip, or subsequently attached to the strip. Such a cover could protect a fastener from the elements.

Figures 8D and 8E show an embodiment similar to that shown in Figures 8A and 8B, except that the ribs 526, which define the predetermined shear points, do not extend the full height as the individual washer elements. In this way, they are much like the embodiment shown in Figure 4B. It is to be understood that the ribs 526 do not have to be centrally located with respect to the washers.

Figure 9 shows an alternative way of forming a strip comprising square or rectangular shaped washers, where washer elements 522 are shown connected generally in the lateral center of the strip. In this illustrated embodiment, the washers are joined at their corners 648 since the side faces 650 of the washers are all at an acute angle to the central axis 623 of the washer strip. The washers are otherwise free of engagement with each other except for the connection at their corners 648, and are thus connected in the lateral center of the strip. Square shaped washers, instead of being joined at their corners as in Figure 9 or like that shown in Figure 2A, can be joined at the center of the strip with the washers oriented in the strip so that the outer exposed side faces of the washers are coplanar. When the washers are oriented in the arrangement just described, they could either be joined to each other at one location in the center of the strip or be joined to each other at the lateral edges of the strip.

The same joining arrangement just described for square washer joining could be used for round washer joining. That is, the washers could be joined at the center of the strip only (Figure 8A) or be joined to each other at the lateral edges of the strip (Figure 3A). V-notches could extend inwardly, as shown in Figure 4A, or could extend outwardly, as shown in Figure 3D so that the outer exposed side faces of the washer strip form a continuous surface. Some embodiments might offer greater strip integrity than other embodiments. For example, greater strip integrity was obtained in strips having a predetermined shear point extending from the "inside out," (See Figs. 3A and 3D) than in strips having a predetermined sheer point extending from the "outside in," (See Fig. 4C). This is due, at least in part, to the manner in which the strip is supported in the tool magazine as it rests on shelves 23, as shown in Fig. 1E.

While the openings 28 of the individual washers 24 have been shown generally circular, it can be appreciated that another shape such as square, rectangular or eliptical could be used to accommodate and correspond to different sized or shaped shanks 19. Similarly, the head portion 20 and upper portion of opening 528 could be semi-circular in shape. Other modifications will become apparent to those skilled in the art.

-18-

Figures 10A and 10B show a washer strip arrangement comprising two spaced apart washer strips 22. In this arrangement, it might be desirable to attach together the upper and lower washer strips at selected points preferably at the severable locations. This would insure that the strips 22 would maintain a constant distance apart from each other, and add strength to the overall strip combination, especially when used in a washer-fastener combination arrangement. Whereas Figure 10A shows washer strips 22 of non-stepped fashion requiring additional material to join or attach the strips 22 together, Figure 10B shows two washer strips 22, in stepped fashion, joined at points so that no additional joining material is needed.

The washer can be used to space the head of a fastener above the work surface after firing into the working material, and could thus serve as a replacement for double-headed nails for bulk loads and would facilitate easy removal of the fastener at the destination point of a shipping load.

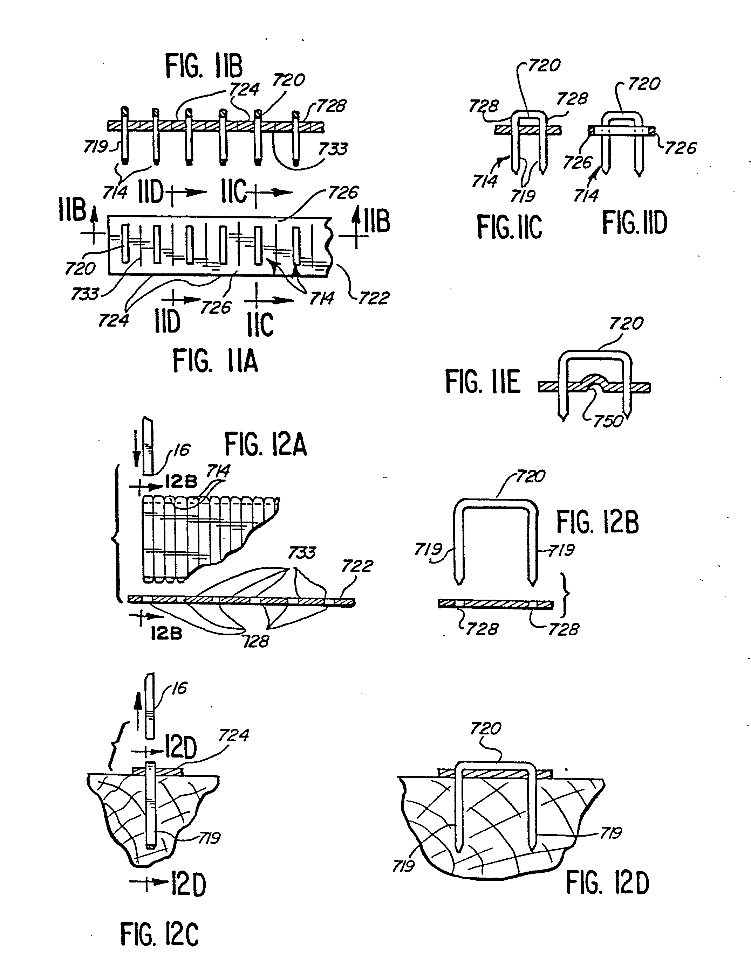

The fastener can also take the form of a staple having two or more shank portions, as illustrated in Figures 11A through 11D. This configuration would be particularly suited for use as an insulator in electrical applications. The embodiment is substantially similar to the embodiment of Figures 2A, 2B, 2C and 2D, except of course, the fastener 714 is a staple and accordingly two openings 728 are defined by each washer 724 in strip 722. Each fastener 714 has two shanks 719 which are each firmly received in openings 728, although the head portion 720, or crown of each fastener 714 is shown elevated above each washer 724 in the strip 722. Of course, the head portion 720 could be seated firmly against the top surface of washer 724. The strip 722 defines weakened shear locations 726 which are defined and localized by punching or forming slits 733 into the strip, for example. When this staple embodiment of two shanks 719 is used, it is to be understood that in the functional description accompanying the single shank fasteners above, wherever reference is made to a single shank of the fastener sliding through a washer or washers, it would, in the staple fastener embodiment, refer to the two shanks each sliding through a washer or washers. Another embodiment of the strip is shown in Figure 11E. In this case a round or "V" groove or channel is formed longitudinally into the strip on its underside for stiffness and also to accommodate and firmly position an electric wire or the like. Of course, more than one channel or groove can be provided for use with more than one wire.

Another arrangement of a washer strip is shown in Figures 12A, 12B, 12C and 12D. Here the washer strip does not receive the fasteners, in this case a standard stack of pre-adhered staples, until a fastener is driven by a driving blade 16. In this embodiment, the washer strip and fastener strip are each inserted separately into a driving tool, which is adapted to receive the strip separately. The shearing of the washer from the strip and its function after driving is similar to the previously described embodiments. This embodiment could also be used for fasteners other than staples.

Figure 13A shows a single washer strip arrangement with a fastener head strip 300 shown joining the fasteners together at their heads in spaced relationship. Such a head strip may be needed depending on the ability of a particular single

-20-

washer strip to hold and carry the fasteners. Even if not needed, such a head strip 300 provides protection to the fasteners from the elements, so that they will be more corrosion resistant. The head strip could be the same type of material as the washer strip material previously described, or may simply be of paper with an adhesive backing.

Figure 13B shows a single washer strip arrangement with a wire 302 shown joining the fasteners together in spaced relationship. Such a wire may be needed depending on the ability of a particular single washer strip to hold and carry the fasteners. The wire 302 could be fastened to the fastener shanks by solder or the like.

Figure 13C shows an alternate head strip arrangement wherein the strip has recesses or openings to accommodate the heads of nails. The head strip protects the surfaces of the nail heads from the elements, and helps maintain and hold the nails in the desired spaced relationshiop.

It is to be understood that each washer strip embodiment herein described and illustrated could be used either alone, or in combination with fasteners. When the strip is used alone, it is loaded separately into a driving tool, but washers combine with fasteners during the driving operation. When the strip is used in combination with fasteners, this is intended to mean that the washer strip serves as a carrier for the fasteners before the driving operation. In both arrangements, the washers function similarly after they are driven from the driving tool. Also, any two washer strip embodiments could be used in combination. Preferably, the width and length of the washer should not be much greater than the diameter of the fastener head to achieve optimum

-21-

results. The thickness of the washer should allow for a minimum overdrive of the fastener tool, while still not providing a permanent set when compression is released. A good compromise is desirable when choosing the hardness range of the washer material, so as to achieve good shear strength and good tensile strength.

From the foregoing, it will be observed that numerous variations and modifications may be effected without departing from the true spirit and scope of the novel concept of the invention. It is to be understood that no limitation with respect to the specific apparatus or embodiments illustrated herein is intended or should be inferred. It is, of course, intended to cover by the appended claims all such modifications as fall within the scope of the claims.

WHAT IS CLAIMED IS:

1.  A strip (12) of fastener elements (14, 714) for use in connection with a rapid-acting fastener driving tool apparatus, comprising: a plurality of rigid fastener elements (14, 714), each having a head portion (20, 720) and at least one elongated shank (19, 719), and carrier means comprising at least one washer strip (22, 122, 222, 422, 522, 722), each washer strip further comprising a plurality of resilient sealing washers (24, 124, 224, 424, 524, 724) serially connected at at least one predetermined shear point location (26, 226, 726), each washer defining an opening (28, 428, 528, 728) constructed and arranged to hold and receive a fastener shank (19, 719) firmly within said opening (28, 428, 528, 728) so that as the fastener element (14, 714) supported in the opening (28) is driven by a driver blade (16), the washer is sheared and separated at the shear location (26, 226, 726) from the remainder of the washers (24) in the washer strip, providing a seal on the portion of the shank just beneath the head portion (20) between the fastener element head portion and the portion of the shank distant from the head portion, so that substantially no waste material is produced.

2.  The fastener element strip (12) of claim 1 wherein the washer strip (12) holds the fastener elements (14) within said openings (28, 128, 228, 328, 428, 528) at a position spaced apart from the head portion (20) of the fastener element (14), so that as the fastener element (14) is driven by a driver blade (16), the fastener shank (19) is slid within the opening of the washer (24, 124, 224, 324, 424, 524) until the washer is situated just beneath the head portion (20), whereupon the washer is sheared from the strip.

3. The fastener element strip (12) of claim 1 wherein the washers (24, 424) are arranged in the strip in a stepped fashion so that the central axis (423) of the strip is at an acute angle to the central axis of the fastener elements (14) received within said openings (28, 428).

4. The fastener element strip of claim 1 wherein said washers (24) are comprised of rubber.

5. The fastener element strip of claim 1 wherein said washer elements (24) are connected generally in the lateral center of the strip.

6. The fastener element strip of claim 1 wherein the carrier means comprises at least two spaced-apart washer strips (22).

7. The fastener element strip of claim 6 wherein at least two spaced-apart washer strips (22) are attached together generally at the shear locations.

8. The fastener element strip of claim 1 wherein said fastener is a staple having at least two shank portions (719), and wherein each washer defines an opening (728) for each shank portion of the fastener.

0053828

FIG. 1A

FIG. 1B

FIG. 1C

FIG. 1D

FIG. 1E

FIG. 13A    300    FIG. 13B    32    26    FIG. 2A

FIG. 2B    FIG. 2E

FIG. 2C    FIG.2F

FIG. 2D

FIG. 3A

FIG. 3B

FIG. 3C

FIG. 3D

FIG. 4C

FIG. 4A

FIG. 4B

FIG. 5

3/4

0053828

FIG. 7A

FIG. 7B

FIG. 6

FIG. 8A

FIG. 8B

FIG. 8C

FIG. 8D

FIG. 8E

FIG. 10A

FIG. 10B

FIG. 13C

FIG. 9

FIG. IIB

720

724

728

719

733

714    IID →    IIC →

726

IIB↑                    ↑IIB

720    733

724    IID →    726    IIC →    714    722

FIG. IIA

720

728    728

714    719

FIG.IIC

720

726

726

714

FIG. IID

720

FIG. IIE

750

16

12B    714

FIG. I2A

733    722

12B    728

720

719    719

FIG. I2B

728    728

16

12D    724

12D

719

FIG. I2C

720

719

719    719

FIG. I2D

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE - A1 - 2 840 541 (OLIN CORP.) <br> * fig. 1 * <br> & GB - A - 2 004 611 <br> -- | 1-3 | F 16 B 15/08 |
| Y | DE - U - 7 336 259 (HILTI) <br> * fig. 1 * <br> -- | 1,2 | |
| Y | DE - U - 7 344 665 (HILTI) <br> * fig. 1 * <br> -- | 1,2 | |
| Y | DE - U - 7 428 828 (HILTI) <br> * fig. 3 * <br> -- | 1,2 | TECHNICAL FIELDS SEARCHED (Int.Cl. 3) |
| Y | FR - A - 2 106 135 (HILTI) <br> * fig. 2 * <br> & US - A - 3 904 032 <br> -- | 1,2 | F 16 B 15/08 |
| Y | US - A - 2 784 405 (WORKING, JR.) <br> * fig. 1 * <br> -- | 1,2 | |
| Y | US - A - 3 779 373 (MAIER) <br> * fig. 1 * <br> -- | 1,2 | CATEGORY OF CITED DOCUMENTS |
| Y | US - A - 3 211 284 (ANSTETT) <br> * fig. 10 * <br> -- <br> ./.. | 1,2 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |

| X | The present search report has been drawn up for all claims | | &: member of the same patent family, corresponding document |
|---|---|---|---|
| **Place of search** Berlin | **Date of completion of the search** 24-02-1982 | **Examiner** ZAPP | |

EPO Form 1503.1 06.78

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate. of relevant passages | Relevant to claim | |
| Y | US – A – 3 294 303 (ANSTETT) <br> * fig. 1 * <br> -- | 1,2 | |
| Y | US – A – 4 121 715 (HODIL, JR.) <br> * abstract * <br> ---- | 1-3 | |

TECHNICAL FIELDS SEARCHED (Int. Cl.³)

EPO Form 1503.2  06.78